# FASCICULE DE BREVET EUROPEEN

(11) **EP 3 632 388 B1**
(45) Date de publication et mention de la délivrance du brevet: **13.11.2024**
(21) Numéro de dépôt: 19201551.9
(22) Date de dépôt: 04.10.2019
(51) Int. Cl.: A61G 3/06, B63B 27/14, B60P 1/43, B65G 69/28

(54) **DISPOSITIF ÉLECTRONIQUE DE PILOTAGE D'UNE RAMPE D'ACCÈS À UNE PORTE DE VÉHICULE, VÉHICULE, PROCÉDÉ DE PILOTAGE ET PROGRAMME D'ORDINATEUR ASSOCIÉS**
ELEKTRONISCHE VORRICHTUNG ZUR STEUERUNG EINER ZUGANGSRAMPE ZU EINER FAHRZEUGTÜR UND ZUGEHÖRIGEM FAHRZEUG, STEUERUNGSVERFAHREN UND COMPUTERPROGRAMM
ELECTRONIC DEVICE FOR CONTROLLING AN ACCESS RAMP TO A VEHICLE DOOR AND ASSOCIATED VEHICLE, CONTROLLING METHOD AND COMPUTER PROGRAM

(30) Priorité: 05.10.2018 FR 1859246
(43) Date de publication de la demande: 08.04.2020
(73) Titulaire: TRANSDEV GROUP INNOVATION, 92130 Issy-les-Moulineaux (FR)
(72) Inventeur: DARNAUD, Thomas, 78000 Versailles (FR); DESMOINEAUX, Nicolas, 92400 Courbevoie (FR); KARAOGUZ, Cem, 91120 Palaiseau (FR)
(74) Mandataire: Lavoix

(56) Documents cités:
- EP-A1- 3 311 785
- US-A1- 2009 106 918
- US-A1- 2009 274 542
- US-A1- 2015 047 133
- US-A1- 2018 044 124

## Description

La présente invention concerne un dispositif électronique de pilotage d'une rampe d'accès à une porte d'un véhicule.

L'invention concerne aussi un véhicule, notamment un véhicule autonome, comprenant une porte, une rampe d'accès à la porte et un tel dispositif électronique de pilotage de la rampe.

L'invention concerne également un procédé de pilotage d'une rampe d'accès à une porte de véhicule, le procédé de pilotage étant mis en oeuvre par un tel dispositif électronique de pilotage de la rampe.

L'invention concerne aussi un programme d'ordinateur comportant des instructions logicielles qui, lorsqu'elles sont exécutées par un ordinateur, mettent en oeuvre un tel procédé de pilotage.

L'invention concerne le domaine des véhicules automobiles autonomes, en particulier des véhicules automobiles autonomes ayant un niveau d'automatisation (de l'anglais *level of automation)* supérieur ou égal à 3 selon le barème de l'Organisation Internationale des Constructeurs Automobiles (OICA).

En particulier, l'invention concerne l'accessibilité des personnes à mobilité réduite dans un tel véhicule autonome. Une personne à mobilité réduite (appelée PMR par la suite) est une personne gênée dans ses mouvements et ses déplacements de manière provisoire ou permanente, que ce soit en raison de sa taille, son état (maladie, surpoids...), son âge, son handicap permanent ou temporaire, des objets ou personnes qu'elle transporte, ou des appareils ou instruments auxquels elle doit recourir pour se déplacer. Ainsi, une PMR est par exemple une personne handicapée ayant des incapacités sensorielles ou intellectuelles, une personne handicapée ayant des incapacités motrices, une personne en fauteuil roulant, une personne de petite taille, une personne avec des bagages encombrants, une personne âgée, une femme enceinte, une personne avec un chariot à provisions, ou une personne avec un ou des jeunes enfants (y compris en poussette).

On connait une commande manuelle de la mise en place d'une rampe facilitant l'accès à un véhicule pour une PMR. En particulier, lorsqu'une PMR se présente devant une porte d'un bus, le chauffeur du bus met en place une rampe après avoir été sollicité par la PMR ou après avoir aperçu la PMR attendant sur le trottoir de monter dans le bus. Lorsque la PMR est entrée dans le bus, le chauffeur range la rampe.

Toutefois, une telle mise en place de la rampe n'est pas toujours optimale, et peut être notamment longue et fastidieuse.

On connait également des documents US 2018/044124 A1, US 2009/106918 A1, US 2009/274542 A1, EP 3 311 785 A1 et US 2015/047133 A1 différents dispositifs électroniques de pilotage d'une rampe.

Le but de l'invention est alors de proposer un dispositif électronique et un procédé associé de pilotage d'une rampe d'accès à une porte de véhicule permettant d'améliorer l'accès aux personnes, notamment les PMR, désirant rentrer dans le véhicule.

A cet effet, l'invention a pour objet un dispositif électronique de pilotage d'une rampe selon la revendication 1.

Ainsi, avec le dispositif électronique de pilotage selon l'invention, le module de détection permet de détecter un élément d'intérêt susceptible d'entrainer un accès difficile au véhicule. Puis le module de commande, en fonction de l'élément d'intérêt, commande le déploiement de la rampe afin de permettre un accès amélioré au véhicule, à toutes les personnes désirant entrer dans le véhicule, notamment aux PMR.

Le dispositif électronique de pilotage selon l'invention est alors particulièrement avantageux lorsque l'élément d'intérêt est par exemple un fauteuil roulant, le dispositif électronique de pilotage selon l'invention permettant alors à la PMR d'accéder au véhicule de manière aisée et rapide.

Suivant d'autres aspects avantageux de l'invention, le dispositif électronique de pilotage est selon l'une quelconque des revendications 2 à 7.

L'invention a également pour objet un véhicule selon la revendication 8.

L'invention a également pour objet un procédé de pilotage d'une rampe selon la revendication 9.

L'invention a également pour objet un programme d'ordinateur selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique, vue de côté, d'un véhicule selon l'invention, comprenant une porte, une rampe d'accès à la porte, un dispositif électronique de pilotage de la rampe et un capteur relié au dispositif électronique de pilotage ;
- la figure 2 est une représentation schématique, vue de derrière, du véhicule de la figure 1 ;
- la figure 3 est une représentation schématique, vue du haut, du véhicule de la figure 1 ;
- la figure 4 est une représentation schématique du dispositif électronique de pilotage de la figure 1 ; et
- la figure 5 est un organigramme d'un procédé, selon l'invention, de pilotage de la rampe d'accès de la porte du véhicule de la figure 1.

Les termes « vertical » et « horizontal » s'entendent de manière générale par rapport aux directions usuelles d'un véhicule circulant sur une surface horizontale.

Le terme « transversal » est défini de manière générale par rapport à une direction horizontale et sensiblement orthogonale à la direction de déplacement d'un véhicule.

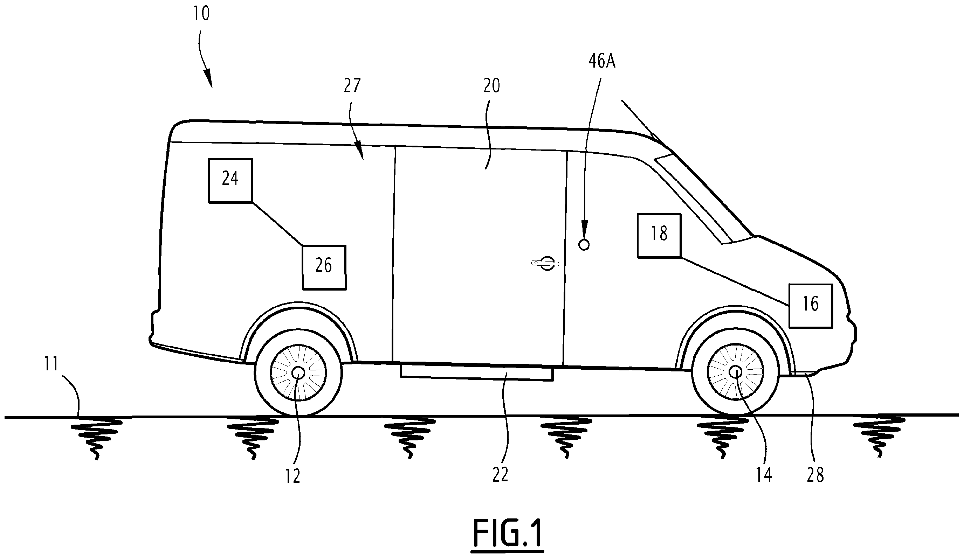

Un véhicule 10 selon l'invention est représenté sur les figures 1 à 3. Le véhicule 10 est par exemple un véhicule automobile, en particulier un bus, configuré pour se déplacer sur une route 11. Le véhicule 10 comprend, de manière connue, des roues arrière 12, des roues avant 14, un moteur 16 relié mécaniquement via une chaîne de transmission (non représentée) aux roues arrière 12 et/ou avant 14 pour l'entraînement desdites roues 12, 14 en rotation autour de leur axe, un système de direction (non représenté), adapté pour agir sur les roues 12 et/ou 14 du véhicule 10 de manière à modifier l'orientation de sa trajectoire, et un système de freinage (non représenté), adapté pour exercer une force de freinage sur les roues 12, 14 du véhicule 10.

Le véhicule 10 est typiquement constitué par un véhicule à traction et/ou propulsion électrique. A cet effet, le moteur 16 est constitué par un moteur électrique, et le véhicule 10 comprend une batterie électrique (non représentée) raccordée électriquement au moteur 16 pour l'alimentation du moteur 16 en électricité.

En complément, le véhicule 10 est de préférence un véhicule automobile autonome. A cet effet, le véhicule 10 comprend un dispositif électronique de conduite autonome 18 adapté pour piloter le véhicule 10 de manière autonome en recevant des informations sur l'environnement du véhicule 10 par l'intermédiaire de capteurs d'environnement (non représentés) et en agissant sur le moteur 16, le système de direction et le système de freinage, de manière à modifier la vitesse, l'accélération et la trajectoire du véhicule 10 en réaction aux informations reçues.

Le véhicule 10 automobile autonome présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation),* ou égal à 4, c'est-à-dire une automatisation élevée (de l'anglais *High Automation),* ou encore égal à 5, c'est-à-dire une automatisation complète (de l'anglais *Full Automation).*

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule 10 automobile autonome. Selon ce niveau 3, un système de gestion de la conduite autonome, embarqué à bord du véhicule 10 automobile autonome, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule 10 automobile autonome, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule 10 automobile autonome, effectue la conduite dynamique latérale et longitudinale dans toutes les situations rencontrées par le véhicule 10 automobile autonome, pendant tout son trajet. Aucun conducteur n'est alors requis.

Le véhicule 10 comprend également au moins une porte 20, une rampe 22 d'accès à la porte 20, au moins un capteur 24 et un dispositif électronique 26 de pilotage de la rampe 22.

Le véhicule 10 présente un volume intérieur 27 configuré pour recevoir des passagers et/ou des marchandises à transporter. Le volume intérieur 27 communique avec l'extérieur du véhicule 10 au moins par la porte 20. La porte 20 est configurée pour permettre aux passagers et/ou marchandises de passer de l'extérieur du volume intérieur 27 à l'intérieur du volume intérieur 27, et inversement. Le volume intérieur 27 est notamment délimité par un plancher 28, sur lequel évoluent les passagers et/ou les marchandises à l'intérieur du volume intérieur 27. La porte 20 est en particulier une porte latérale définissant une ouverture transversale s'étendant verticalement depuis le plancher 28.

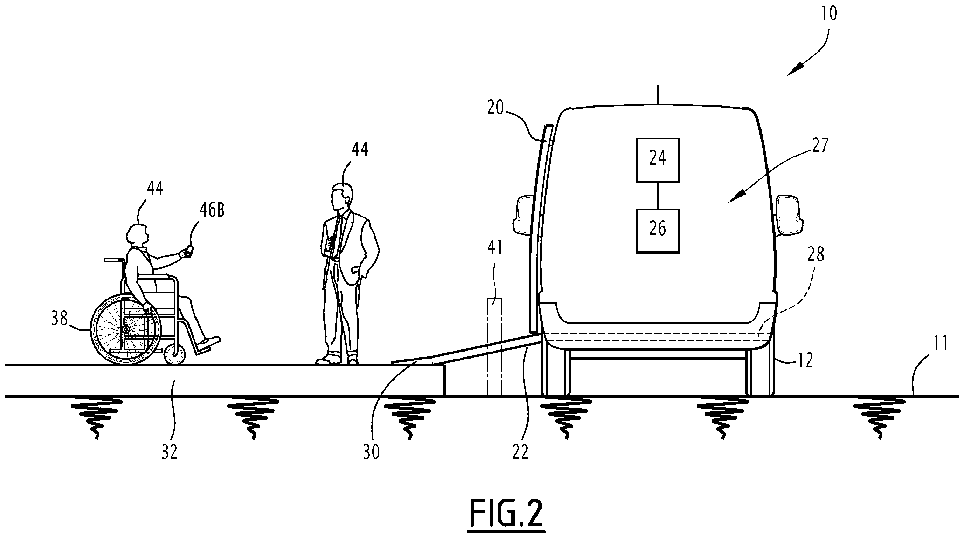

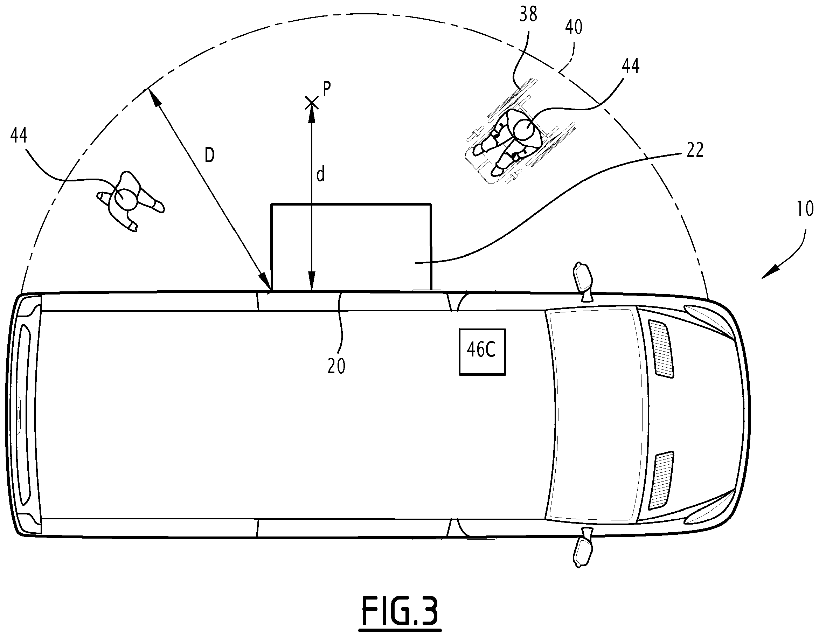

De manière connue, la rampe 22 est propre à passer d'une configuration rétractée, représentée sur la figure 1, à une configuration déployée, représentée sur les figures 2 et 3. Le véhicule 10 comprend également un moteur d'actionnement, non représenté, relié à la rampe 22 et configuré pour faire passer mécaniquement la rampe 22 d'une configuration à l'autre. La rampe 22 est par exemple en forme d'un plateau, comme représenté sur la figure 2, ce plateau étant coulissant par rapport au plancher 28 ainsi que décrit ci-après, ou encore articulé par rapport au plancher 28.

Dans la configuration rétractée, la rampe 22 est disposée sous le plancher 28. En particulier, la rampe 22 ne s'étend pas transversalement au-delà du plancher 28. A titre d'exemple, la rampe 22 est située dans un logement, non représenté, protégeant la rampe 22 des chocs extérieurs.

Dans la configuration déployée, la rampe 22 fait saillie transversalement depuis le plancher 28 vers l'extérieur du véhicule 10. La rampe 22 comprend une extrémité 30 située à l'opposé du plancher 28, l'extrémité 30 étant propre à être en contact avec la route 11 ou un trottoir 32. La rampe 22 présente alors typiquement une pente comprise entre 0 % et 8 % avec le plancher 28. La rampe 22 forme alors une liaison continue s'étendant depuis la route 11 ou le trottoir 32 vers le plancher 28 du véhicule 10. Dans la configuration déployée, l'accès au véhicule 10 pour une PMR située sur la route 11 ou le trottoir 32 est ainsi grandement simplifié.

Chaque capteur 24 est apte à être relié au dispositif électronique de pilotage 26. Selon un aspect complémentaire de l'invention, l'au moins un des capteurs 24 est une caméra embarquée dans le véhicule 10. La caméra est orientée vers l'extérieur du véhicule 10. La caméra est par exemple disposée à proximité de la porte 20. Par « à proximité », on entend à une distance de la porte 20 inférieure à 1 m.

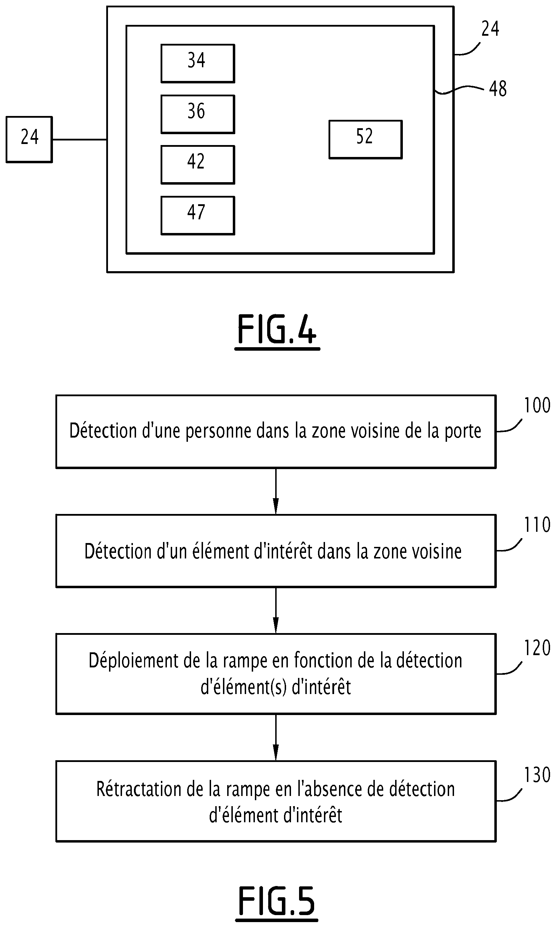

Comme représenté sur la figure 4, le dispositif électronique de pilotage 26 comprend selon l'invention un module de détection 34 et un module de commande 36.

Le module de détection 34 est configuré pour détecter, via l'au moins un des capteurs 24, au moins un élément d'intérêt 38 se trouvant dans une zone voisine 40 de la porte 20. L'au moins un capteur 24 est apte à être relié au module de détection 34.

Le module de détection 34 est configuré pour détecter ledit au moins un élément d'intérêt 38 via la mise en oeuvre d'un algorithme connu en soi de traitement d'image lorsque le capteur 24 est une caméra.

Le module de détection 34 est configuré pour détecter un élément d'intérêt 38 suite à au moins une identification dudit élément d'intérêt 38 dans la zone voisine 40 à un instant temporel donné. En particulier, le module de détection 34 est configuré pour détecter un élément d'intérêt 38 suite à une unique identification dudit élément d'intérêt 38. En variante, le module de détection 34 est configuré pour détecter un élément d'intérêt 38 suite à une pluralité d'identifications successives dudit élément d'intérêt 38 en des instants temporels successifs ; ou encore suite à une pluralité d'identifications de l'élément d'intérêt 38, pour laquelle le ratio du nombre d'identifications de l'élément d'intérêt 38 par rapport à un nombre de tentatives de telles identifications au cours d'une période temporelle donnée, i.e. par rapport à un nombre d'opérations de recherche dudit élément d'intérêt 38 au cours d'une période temporelle donnée, est supérieur à une valeur prédéfinie, par exemple à la valeur médiane égale à 0,5. Les erreurs de détection d'élément d'intérêt 38 sont ainsi fortement minimisées.

Chaque élément d'intérêt 38 est choisi parmi le groupe consistant en : une caractéristique associée à une PMR et un obstacle 41 susceptible de gêner, i.e. obstruer, le passage de la rampe 22 d'une configuration à l'autre.

Une caractéristique associée à une PMR est choisie parmi le groupe consistant en : un objet caractéristique associé à une PMR, une caractéristique dynamique d'une PMR ou une caractéristique statique d'une PMR.

Un objet caractéristique associé à une PMR est un objet particulier tenu par, ou au contact de, la PMR, par exemple un fauteuil roulant, comme illustré sur la figure 2, ou une canne, des béquilles, une poussette, une valise, un chariot à provisions, etc.

Une caractéristique dynamique de la PMR est typiquement un déplacement caractéristique de la PMR, par exemple une démarche particulière comme un boitement, une vitesse de déplacement lente, une difficulté à monter dans le véhicule 10, etc.

Une caractéristique statique de la PMR est typiquement une posture caractéristique de la PMR, par exemple une courbure importante du dos, une posture avec une dissymétrie importante, etc.

Un obstacle 41 susceptible de gêner le passage de la rampe 20 d'une configuration à l'autre est par exemple un poteau, comme illustré sur la figure 2, ou une borne anti-stationnement, un sac ou une personne situés en face de la porte 20, un autre véhicule garé à côté du véhicule 10, etc.

L'homme du métier comprendra qu'une caractéristique de la PMR est située en dehors de la course de la rampe 22. En effet, une caractéristique de la PMR qui serait située sur la course de la rampe 22 serait alors considérée comme un éventuel obstacle 41.

Comme visible sur la figure 3, pour chaque point P de la zone voisine 40, la distance d entre la porte 20 et ledit point P est inférieure à une distance maximale prédéterminée D. De manière connue, la distance d'un point à un segment est définie comme la distance du point au projeté orthogonal du point sur à la droite passant par le segment, lorsque ce projeté orthogonal appartient au segment. Lorsque le projeté orthogonal par rapport à la droite passant par le segment n'appartient pas à ce segment, la distance du point au segment est définie par la distance minimale du point à l'une des deux extrémités du segment. La distance maximale prédéterminée D est par exemple comprise entre 20 cm et 75 cm. La zone voisine 40 est par exemple un demi-disque comme dans l'exemple de la figure 3, une demi-surface elliptique, un demi-stade, une surface oblongue ou encore une portion de disque d'ouverture angulaire inférieure à 180°. La zone voisine 40 est de préférence centrée sur la porte 20.

Le module de détection 34 est configuré pour envoyer un message au module de commande 36 comprenant au moins une information sur chaque élément d'intérêt 38 détecté.

Selon l'invention, le module de détection 34 est configuré pour attribuer à chaque élément d'intérêt 38 un indice de confiance en fonction de paramètre(s) prédéterminé(s). Le ou les paramètres prédéterminés permettent de caractériser la pertinence des éléments d'intérêt 38, et en particulier la ou les caractéristiques associées à une PMR et le ou les obstacles 41. L'indice de confiance est par exemple calculé via un algorithme mathématique prédéfini ou un réseau de neurones. A titre d'exemple, l'indice de confiance est une valeur comprise entre 0 et 1. Le module de détection 34 est configuré pour attribuer un indice de confiance croissant avec la pertinence de l'élément d'intérêt 38. Une valeur de 1 signifie que le module de détection 34 est sûr de la pertinence de l'élément d'intérêt 38. Une valeur de 0 signifie que le module de détection 34 est sûr que l'élément d'intérêt 38 n'est pas pertinent.

Le module de commande 36 est configuré pour recevoir le message envoyé par le module de détection 34. Le module de commande 36 est configuré pour commander le passage de la rampe 22 d'une configuration à l'autre configuration en fonction de la détection d'élément(s) d'intérêt 38. En particulier, le module de commande 36 est configuré pour envoyer une instruction correspondante de commande au moteur associé à la rampe 22 afin de déployer ou rétracter la rampe 22.

Selon un aspect complémentaire de l'invention, le module de commande 36 est configuré pour commander le passage de la rampe 22 de la configuration rétractée à la configuration déployée en cas de détection d'au moins un élément d'intérêt 38 se trouvant en dehors de la course de la rampe 22. En particulier, le module de commande 36 est configuré pour commander le passage de la rampe 22 de la configuration rétractée à la configuration déployée seulement en cas de détection d'une caractéristique d'une PMR, la caractéristique de la PMR se trouvant en dehors la course de la rampe 22. Ainsi, le module de commande 36 est configuré pour commander le déploiement de la rampe 22 uniquement en cas de présence d'une PMR à proximité du véhicule 10 et en dehors la course de la rampe 22.

En variante ou en complément, le module de commande 36 est configuré pour bloquer le passage de la rampe 22 en cas de détection d'au moins un élément d'intérêt 38 se trouvant sur la course de la rampe 22. En particulier, le module de commande 36 est configuré pour bloquer le passage de la rampe 22 de la configuration rétractée à la configuration déployée ou inversement, en cas de détection d'un obstacle 41 susceptible de gêner le passage de la rampe 22 d'une configuration à l'autre. Ainsi, le module de commande 36 est configuré pour empêcher le déploiement ou la rétractation de la rampe 22 en cas de présence d'un obstacle 41 sur la course de la rampe 22 susceptible de bloquer ou d'endommager la rampe 22.

En complément, le module de commande 36 est de préférence configuré pour commander le passage de la rampe 22 de la configuration rétractée à la configuration déployée seulement en cas de détection d'une caractéristique d'une PMR se trouvant en dehors la course de la rampe 22 et en l'absence de détection d'au moins un obstacle 41 se trouvant sur la course de la rampe 22.

Selon l'invention, le module de commande 36 est propre à commander le passage de la rampe 22 d'une configuration à l'autre configuration en fonction du résultat de la comparaison de l'indice de confiance de chaque élément d'intérêt 38 calculé par le module de détection 34 à au moins une valeur seuil prédéterminée. La ou les valeurs seuil prédéterminée permettent de définir un niveau d'erreur acceptable sur la pertinence de l'élément d'intérêt 38. La valeur du seuil prédéterminée est ainsi ajustable en fonction du niveau d'erreur accepté. En particulier, le module de commande 36 est propre à commander le passage de la rampe 22 de la configuration rétractée à la configuration déployée uniquement lorsque l'indice de confiance d'au moins une caractéristique d'une PMR est supérieur à une première valeur seuil prédéterminée SH, dite seuil haut, et lorsque l'indice de confiance de tout obstacle 41 éventuel est inférieur à une deuxième valeur seuil prédéterminée SB dite seuil bas. L'homme du métier comprendra que le fait que l'indice de confiance de tout obstacle 41 éventuel soit inférieur au seuil bas SB correspond à une absence d'obstacle 41 sur la course de la rampe 22 avec une probabilité suffisante. Le seuil haut SH est préférentiellement plus élevé que le seuil bas SB. A titre d'exemple, la valeur du seuil haut SH est de 0,8 et la valeur du seuil bas SB est de 0,2.

Lorsque l'indice de confiance d'aucune caractéristique d'une PMR est supérieur au seuil haut et qu'au moins un indice de confiance d'une caractéristique d'une PMR est compris entre le seuil bas SB et le seuil haut SH, le module de commande 36 est propre à commander le module de détection 34 afin que le module de détection 34 lance à nouveau une détection d'éléments d'intérêt 38. En complément, le module de commande 36 est propre à générer un signal d'invitation destiné à la ou les personnes 44 présentes dans la zone voisine 40 les invitant à se rapprocher du capteur 24. Ceci permet d'affiner l'indice de confiance de l'élément d'intérêt 38 présent initialement entre les deux seuils SB, SH afin que cet indice de confiance devienne supérieur au seuil haut SH ou inférieur au seuil bas SB.

Lorsque ledit indice de confiance est encore entre les deux seuils SB, SH suite à la génération du signal d'invitation et qu'une limite temporelle prédéterminée est dépassée, le module de commande 36 est propre à attribuer de façon arbitraire un indice de confiance supérieur au seuil haut SH de manière conservative afin de lever l'incertitude. En variante, le module de commande 36 est propre à attribuer de façon arbitraire un indice de confiance inférieur au SB.

En variante, lorsque ledit indice de confiance est entre les deux seuils SB, SH, le module de commande 36 est configuré pour envoyer une requête comprenant des informations sur l'élément d'intérêt 38 incertain à un dispositif de surveillance extérieur au véhicule 10. Le module de commande 36 est en outre configuré pour recevoir en retour une réponse de la part du dispositif de surveillance extérieur, cette réponse comprenant un indice de confiance corrigé supérieur au seuil haut SH ou inférieur au seuil bas SB pour l'élément d'intérêt 38 incertain. L'indice de confiance corrigé est par exemple déterminé par un opérateur en fonction des informations reçues sur l'élément d'intérêt 38 incertain.

L'indice de confiance représente par exemple la probabilité que l'élément d'intérêt 38 soit une caractéristique d'une PMR lorsque qu'il se trouve en dehors de la course de la rampe 22, ou bien que l'élément d'intérêt 38 soit un obstacle 41 lorsque qu'il se trouve dans la course de la rampe 22. Ainsi, le module de commande 36 est propre à commander le déploiement de la rampe 22 uniquement en cas de détection d'une PMR en dehors de la course de la rampe 22 et une absence d'obstacle 41 avec une probabilité supérieure à une probabilité seuil prédéterminée. Le module de commande 36 est en outre propre à bloquer le déploiement de la rampe 22 en cas de détection d'un obstacle 41 avec une probabilité supérieure à une probabilité seuil prédéterminée.

En complément, le module de commande 36 est uniquement propre à commander le passage de la rampe 22 de la configuration déployée à la configuration rétractée lorsque l'indice de confiance de chaque élément d'intérêt 38 est inférieur au seuil bas SB. Ainsi, le module de commande 36 est propre à commander la rétractation de la rampe 22 en cas de probabilité de présence d'une PMR ou d'un obstacle 41 inférieure à une probabilité seuil prédéterminée.

En variante, le module de commande 36 est propre à commander le passage de la rampe 22 d'une configuration à l'autre configuration en fonction du résultat de la comparaison de l'indice de confiance de chaque élément d'intérêt 38, calculé par le module de détection 34, à une unique valeur seuil prédéterminée. Le seuil haut SH est alors égal au seuil bas SB. Par exemple, l'unique seuil est égal à 0,5. Dans ce mode de réalisation, la zone d'incertitude entre les deux seuils SB, SH n'existe pas et l'homme du métier comprendra que tout se passe comme s'il n'y avait pas d'indice de confiance, le module de détection 34 détectant ou non la présence d'un élément d'intérêt 38 de façon binaire.

Selon un aspect complémentaire de l'invention, le dispositif électronique de pilotage 26 comporte en outre un module d'activation 42 configuré pour activer le module de détection 34, le module d'activation 42 étant propre à détecter la présence d'une personne 44 dans la zone voisine 40 de la porte 22 du véhicule 10. En particulier, le module d'activation 42 est propre à être relié à un dispositif choisi parmi le groupe consistant en : un organe de commande 46A propre à être actionné par la personne 44 à proximité de la porte 20, un terminal électronique mobile 46B, et un capteur de présence 46C de la personne 44 à proximité de la porte 20. L'organe de commande 46A est par exemple un bouton situé à côté de la porte 20, comme visible sur la figure 1. Ce bouton est par exemple le bouton de demande d'ouverture de la porte 20. Le terminal électronique mobile 46B est par exemple un téléphone portable ou une tablette numérique, comme visible sur la figure 2. Le capteur de présence, visible sur la figure 3, est par exemple un lidar, tel qu'un lidar à balayage.

Selon un aspect complémentaire de l'invention, le dispositif électronique de pilotage 26 comporte en outre un module de génération 47 configuré pour générer un signal d'information S relatif à la configuration de la rampe 22. Le signal d'information S est destiné à un utilisateur ou à un système électronique de supervision, non représenté. Le signal d'information S comprend par exemple une information sur la configuration actuelle de la rampe 22 et/ou sur le passage de la rampe 22 d'une configuration à l'autre.

Le signal d'information S est par exemple un signal visuel. Le module de génération 47 est alors propre à envoyer le signal d'information S à un écran d'affichage. L'écran est par exemple placé à proximité de la porte 20, afin que les personnes 44 situées dans la zone voisine 40 de la porte 20 reçoivent ladite information relative à la configuration de la rampe 22.

En variante, le signal d'information S est un signal sonore. Le module de génération 47 est alors propre à envoyer le signal d'information S à un haut-parleur. Le haut-parleur est par exemple placé à proximité de la porte 20, afin que les personnes 44 situées dans la zone voisine 40 de la porte 20 reçoivent ladite information relative à la configuration de la rampe 22. Cette information sonore est particulièrement avantageuse lorsqu'une personne 44 malvoyante est située dans la zone voisine 40.

Dans l'exemple de la figure 4, le dispositif électronique de pilotage 26 comprend une unité de traitement d'informations 48 formée par exemple d'une mémoire 50 et d'un processeur 52 associé à la mémoire 50.

Dans l'exemple de la figure 4, le module de détection 34, le module de commande 36, le module d'activation 42 et le module de génération 47 sont réalisés chacun sous forme d'un logiciel, ou d'une brique logicielle, exécutables par le processeur 52. La mémoire 50 du dispositif électronique de pilotage 26 est alors apte à stocker un logiciel de détection configuré pour détecter, via au moins un capteur 26, au moins un élément d'intérêt 36 se trouvant dans une zone voisine 40 de la porte 22, un logiciel de commande configuré pour commander le passage de la rampe 22 d'une configuration à l'autre configuration en fonction de la détection d'élément(s) d'intérêt 36, un logiciel d'activation configuré pour commander le module de détection 34 et un logiciel de génération configuré pour générer un signal d'information S relatif à la configuration de la rampe 22. Le processeur 52 est alors apte à exécuter chacun des logiciels parmi le logiciel de détection, le logiciel de commande, le logiciel d'activation et le logiciel de génération.

En variante non représentée, le module de détection 34, le module de commande 36, le module d'activation 42 et le module de génération 47 sont réalisés chacun sous forme d'un composant logique programmable, tel qu'un FPGA (de l'anglais *Field Programmable Gate Array),* ou encore sous forme d'un circuit intégré dédié, tel qu'un ASIC (de l'anglais *Application Spécifie Integrated Circuit).*

Lorsque le dispositif électronique de pilotage 26 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

Le fonctionnement du dispositif électronique de pilotage 26 selon l'invention va désormais être expliqué à l'aide de la figure 5 représentant un organigramme du procédé, selon l'invention, de pilotage de la rampe 22 d'accès à la porte 20 du véhicule 10, le procédé étant mis en oeuvre par le dispositif électronique de pilotage 26.

Le véhicule 10 est initialement en mouvement et la rampe 22 est dans sa configuration rétractée, comme visible sur la figure 1. Le véhicule 10 s'arrête, par exemple à un arrêt de bus ou sur une place de parking à côté d'un trottoir 32. Au moins une personne 44 est située dans la zone voisine 40 de la porte 22, comme visible sur la figure 3. Au moins un élément d'intérêt 38 est également situé dans la zone voisine 40. L'élément d'intérêt 38 est par exemple une caractéristique de la personne 44, la personne 44 étant une PMR. En complément ou en variante, l'élément d'intérêt 38 est un obstacle 41 susceptible de gêner le déploiement de la rampe 22.

Le module d'activation 42 détecte alors la présence de la personne 44, lors d'une étape facultative 100. En particulier, la personne 44 actionne l'organe de commande 46A à proximité de la porte 20. L'organe de commande 46A envoie alors un signal au module d'activation 42 afin d'indiquer la présence de ladite personne 44 dans la zone voisine 40.

En variante de l'étape 100, la personne 44 communique avec le module d'activation 42 via un terminal électronique mobile 46B, par exemple au moyen d'une application logicielle spécifique. En particulier, l'application logicielle contient des informations sur la mobilité de la personne 44. La personne 44 réserve une place dans le véhicule 10 et indique à quel endroit ou à quel arrêt la personne 44 désire rentrer dans le véhicule 10. Le terminal électronique mobile 46B envoie alors un signal au module d'activation 42 afin d'indiquer la présence de ladite personne 44 audit endroit ou arrêt. En complément facultatif, le terminal électronique mobile 46B indique au module d'activation 42 la présence de la personne 44 dans la zone voisine 40 au moyen d'un système de géolocalisation embarqué dans le terminal électronique mobile 46B.

Dans une autre variante de l'étape 100, le capteur de présence 46C à proximité de la porte 20 détecte la personne 44 et envoie un signal au module d'activation 42 afin d'indiquer la présence de ladite personne 44 dans la zone voisine 40.

Le module d'activation 42 commande ensuite le module de détection 34, lors d'une étape facultative. En particulier, le module d'activation 42 active le module de détection 36.

En variante, l'étape 100 n'est pas effectuée, et le module de détection 34 est mis en oeuvre indépendamment d'une activation par le module d'activation 42, ce module d'activation 42 étant optionnel. Le module de détection 34 est par exemple mis en oeuvre dès que le véhicule 10 est en service. En variante, le module de détection 34 est mis en oeuvre lorsque le véhicule 10 est en fonctionnement et temporairement immobilisé, par exemple à un arrêt pour la montée/descente de voyageurs.

Puis, lors d'une étape 110, le module de détection 34 détecte, via le capteur 24, chaque élément d'intérêt 38 se trouvant dans la zone voisine 40 de la porte 20. Le module de détection 34 envoie alors un message au module de commande 36 comprenant au moins une information sur chaque élément détecté 38 par le capteur 24. En particulier, le capteur 24 est une caméra embarquée dans le véhicule 10 filmant la zone voisine 40.

En complément facultatif, lors de l'étape 110, le module de détection 34 attribue à chaque élément d'intérêt 38 un indice de confiance en fonction de paramètres prédéterminés.

Lors d'une étape 120, le module de commande 36 commande ensuite le passage de la rampe 22 de la configuration rétractée à la configuration déployée en fonction de la détection d'élément(s) d'intérêt 38, par exemple en présence d'au moins un élément d'intérêt 38.

En particulier, le module de commande 36 commande le passage de la rampe 22 de la configuration rétractée à la configuration déployée seulement en cas de détection d'une caractéristique d'une PMR situé en dehors de la course de la rampe 22.

En variante ou en complément, le module de commande 36 bloque le passage de la rampe 22 de la configuration rétractée à la configuration déployée en cas de détection d'un obstacle 41 susceptible de gêner le déploiement de la rampe 22.

En complément, le module de commande 36 commande le passage de la rampe 22 de la configuration rétractée à la configuration déployée seulement en cas de détection d'une caractéristique d'une PMR se trouvant en dehors la course de la rampe 22 et en l'absence de détection d'au moins un obstacle 41 se trouvant sur la course de la rampe 22.

En complément facultatif, le module de commande 36 commande le passage de la rampe 22 d'une configuration à l'autre configuration en fonction du résultat de la comparaison de l'indice de confiance de chaque élément d'intérêt 38 à au moins une valeur seuil prédéterminée. En particulier, le module de commande 36 commande le passage de la rampe 22 de la configuration rétractée à la configuration déployée uniquement lorsque l'indice de confiance d'au moins une caractéristique d'une PMR est supérieur au seuil haut SH et lorsque l'indice de confiance de tout obstacle 41 éventuel est inférieur au seuil bas SB.

Dans le cas où le module de module de détection 34 détecte au moins une PMR et aucun obstacle 41 sur la course de la rampe 22, le module de commande 36 envoie un signal au moteur associé à la rampe 22 afin de déployer la rampe 22.

En complément facultatif, le module de génération 47 génère alors un signal d'information S relatif à la configuration de la rampe 22. Le signal d'information S est affiché sur un écran ou diffusé sur un haut-parleur. Le signal d'information S indique par exemple que la rampe 22 est en train de passer de la configuration rétractée à la configuration déployée.

La rampe 22 passe alors de la configuration rétractée à la configuration déployée, comme visible sur les figures 2 et 3. L'extrémité 30 de la rampe 22 est alors en contact avec la route 11 ou un trottoir 32, comme représenté sur la figure 2. La rampe 22 forme une liaison continue s'étendant depuis la route 11 ou le trottoir 32 vers le plancher 28 du véhicule 10.

En complément facultatif, le module de génération 47 génère un signal d'information S invitant par exemple la PMR à pénétrer dans le véhicule 10 lorsque la rampe 22 est dans la configuration déployée.

Chaque PMR s'engage sur la rampe 22 et pénètre dans le véhicule 10.

Puis, lors d'une étape 130, le module de commande 36 commande ensuite le passage de la rampe 22 de la configuration déployée à la configuration rétractée en fonction de la détection d'élément(s) d'intérêt 38, par exemple en l'absence d'élément d'intérêt 38.

En particulier, le module de commande 36 commande le passage de la rampe 22 de la configuration déployée à la configuration rétractée lorsque le module de détection 34 ne détecte plus d'élément d'intérêt 38 dans la zone voisine 40.

En variante ou en complément, le module de commande 36 bloque le passage de la rampe 22 de la configuration déployée à la configuration rétractée en cas de détection d'un obstacle 41 susceptible de gêner la rétractation de la rampe 22.

En complément facultatif, le module de commande 36 commande la rétractation de la rampe 22 en fonction du résultat de la comparaison de l'indice de confiance de chaque élément d'intérêt 38 à au moins une valeur seuil prédéterminée. En particulier, le module de commande 36 commande la rétractation de la rampe 22 lorsque l'indice de confiance de chaque élément d'intérêt 38 est inférieur au seuil bas SB.

Dans le cas où le module de module de détection 34 ne détecte pas de PMR et aucun obstacle 41 sur la course de la rampe 22, le module de commande 36 envoie un signal au moteur associé à la rampe 22 afin de rétracter la rampe 22.

En complément facultatif, le module de génération 47 génère alors un signal d'information S relatif à la configuration de la rampe 22. Le signal d'information S indique par exemple que la rampe 22 est en train de passer de la configuration déployée à la configuration rétractée.

La rampe 22 passe alors de la configuration déployée à la configuration rétractée.

On conçoit ainsi que le dispositif électronique de pilotage 26 selon l'invention, et le procédé de pilotage associé, permettent d'améliorer l'accès aux personnes 44, notamment aux PMR, désirant rentrer dans le véhicule 10, ou bien sortir du véhicule 10. Le dispositif électronique de pilotage 26 permet donc de fournir un service de qualité et un accompagnement amélioré aux PMR désirant se déplacer à bord du véhicule 10.

Le dispositif électronique de pilotage 26 permet une vérification algorithmique et automatique d'éléments d'intérêt 38 à proximité du véhicule 10. Le dispositif électronique de pilotage 26 est alors apte à être mis en oeuvre dans un véhicule automobile autonome en particulier. En effet, lorsque le véhicule 10 est un véhicule automobile autonome, la mise en place de la rampe 22 est particulièrement compliquée sans le dispositif électronique de pilotage 26 selon l'invention.

Le dispositif électronique de pilotage 26 permet en outre une rapidité et une sécurité améliorée dans le déploiement de la rampe 22 et ainsi d'éviter des retards dus à un déploiement long et fastidieux de la rampe 22 à chaque arrêt du véhicule 10.

Enfin, le dispositif électronique de pilotage 26 permet de protéger la rampe 22 contre l'endommagement causé par des chocs avec des obstacles placés sur les trottoirs 32 et ainsi augmente significativement la durée de vie et la fiabilité de la rampe 22.

## Revendications

1. Dispositif électronique (26) de pilotage d'une rampe (22) d'accès à une porte (20) d'un véhicule (10), la rampe (22) étant propre à passer d'une configuration rétractée à une configuration déployée, le dispositif électronique (26) comportant :
- un module de détection (34) configuré pour détecter, via au moins un capteur (24), au moins un élément d'intérêt (38) se trouvant dans une zone voisine (40) de la porte (20), chaque capteur (24) étant apte à être relié au module de détection (34) ; et
- un module de commande (36) configuré pour commander le passage de la rampe (22) de l'une des configurations rétractée et déployée à l'autre en fonction de la détection de l'au moins un élément d'intérêt (38) ;
**caractérisé en ce que** le module de détection (34) est configuré pour attribuer à chaque élément d'intérêt (38) un indice de confiance en fonction de paramètres prédéterminés, le module de commande (36) étant propre à commander le passage de la rampe (22) de l'une des configurations rétractée et déployée à l'autre en fonction du résultat de la comparaison de l'indice de confiance de chaque élément d'intérêt (38) à au moins une valeur seuil prédéterminée (SB, SH).

2. Dispositif électronique (26) selon la revendication 1, dans lequel l'au moins un des capteurs (24) est une caméra propre à être embarquée dans le véhicule (10),

3. Dispositif électronique (26) selon la revendication 1 ou 2, dans lequel, pour chaque point (P) de la zone voisine (40), la distance entre la porte et ledit point (d) est inférieure à une distance maximale prédéterminée (D).

4. Dispositif électronique (26) selon l'une quelconque des revendications précédentes, dans lequel le dispositif électronique (26) comporte, en outre, un module d'activation (42) configuré pour commander le module de détection (34), le module d'activation (42) étant propre à détecter la présence d'une personne (44) dans une zone voisine (40) de la porte du véhicule (10).

5. Dispositif électronique (26) selon l'une quelconque des revendications précédentes, dans lequel chaque élément d'intérêt (38) est choisi parmi le groupe consistant en :
- une caractéristique d'une personne à mobilité réduite ; et
- un obstacle (41) susceptible de gêner le passage de la rampe d'une configuration à l'autre.

6. Dispositif électronique (26) selon la revendication 5, dans lequel le module de commande (36) est configuré pour commander le passage de la rampe (22) de la configuration rétractée à la configuration déployée seulement en cas de détection d'une caractéristique d'une personne à mobilité réduite.

7. Dispositif électronique (26) selon l'une quelconque des revendications précédentes, dans lequel le dispositif électronique (26) comporte, en outre, un module de génération (47) configuré pour générer un signal d'information (S) relatif à la configuration de la rampe (22), le signal d'information (S) étant destiné à un utilisateur ou à un système électronique de supervision.

8. Véhicule (10), notamment véhicule automobile autonome, comprenant :
- une porte (20) ;
- une rampe (22) d'accès à la porte (20) ; et
- un dispositif électronique (26) de pilotage de la rampe (22) ;
- un capteur (24) relié au dispositif électronique de pilotage (26) ;
**caractérisé en ce que** le dispositif électronique de pilotage (26) est selon l'une quelconque des revendications précédentes.

9. Procédé de pilotage d'une rampe d'accès à une porte de véhicule, le procédé de pilotage étant mis en oeuvre par un dispositif électronique de pilotage (26) et comprenant les étapes suivantes :
- la détection, via au moins un capteur (24), d'au moins un élément d'intérêt (38) se trouvant dans une zone voisine (40) de la porte (20) ;
- la commande du passage de la rampe (22) d'une des configurations rétractée et déployée à l'autre en fonction de la détection d'éléments d'intérêt (38)
l'étape de détection comportant l'attribution à chaque élément d'intérêt (38) d'un indice de confiance en fonction de paramètres prédéterminés, et lors de l'étape de commande, le passage de la rampe (22) est commandé d'une configuration à l'autre configuration en fonction du résultat de la comparaison de l'indice de confiance de chaque élément d'intérêt (38) à au moins une valeur seuil prédéterminée (SB, SH).

10. Programme d'ordinateur comportant des instructions logicielles qui, lorsqu'elles sont exécutées par un ordinateur, mettent en oeuvre un procédé selon la revendication précédente.

## Patentansprüche

1. Elektronische Vorrichtung (26) zur Steuerung einer Rampe (22) für den Zugang zu einer Tür (20) eines Fahrzeugs (10), wobei die Rampe (22) geeignet ist, um von einer eingezogenen Konfiguration in eine ausgefahrene Konfiguration überzugehen, die elektronische Vorrichtung (26) umfassend:
- ein Erfassungsmodul (34), das konfiguriert ist, um über mindestens einen Sensor (24) mindestens ein Element von Interesse (38) zu erfassen, das sich in einem benachbarten Bereich (40) der Tür (20) befindet, wobei jeder Sensor (24) geeignet ist, um mit dem Erfassungsmodul (34) verbunden zu werden; und
- ein Steuermodul (36), das konfiguriert ist, um den Übergang der Rampe (22) abhängig von der Erfassung des mindestens einen Elements von Interesse (38) von einer von der eingezogenen und ausgefahrenen Konfigurationen in die andere zu steuern;
**dadurch gekennzeichnet, dass** das Erfassungsmodul (34) konfiguriert ist, um jedem Element von Interesse (38) einen Vertrauensindex abhängig von vorbestimmten Parametern zuzuweisen, wobei das Steuermodul (36) geeignet ist, um den Übergang der Rampe (22) von der einen von der eingezogenen und der ausgefahren Konfigurationen zu der anderen abhängig von dem Resultat des Vergleichs des Vertrauensindexes von jedem Element von Interesse (38) mit mindestens einem vorbestimmten Schwellenwert (SB, SH) zu steuern.

2. Elektronische Vorrichtung (26) nach Anspruch 1, wobei mindestens einer der Sensoren (24) eine Kamera ist, die geeignet ist, um an Bord des Fahrzeugs (10) zu sein.

3. Elektronische Vorrichtung (26) nach Anspruch 1 oder 2, wobei für jeden Punkt (P) in dem benachbarten Bereich (40) der Abstand zwischen der Tür und dem Punkt (d) kleiner ist als ein vorbestimmter maximaler Abstand (D).

4. Elektronische Vorrichtung (26) nach einem der vorherigen Ansprüche, wobei die elektronische Vorrichtung (26) ferner ein Aktivierungsmodul (42) umfasst, das konfiguriert ist, um das Erfassungsmodul (34) zu steuern, wobei das Aktivierungsmodul (42) geeignet ist, um die Anwesenheit einer Person (44) in einem benachbarten Bereich (40) der Tür des Fahrzeugs (10) zu erfassen.

5. Elektronische Vorrichtung (26) nach einem der vorherigen Ansprüche, wobei jedes Element von Interesse (38) ausgewählt ist aus der Gruppe, bestehend aus:
- einem Merkmal einer Person mit eingeschränkter Mobilität; und
- einem Hindernis (41), das den Übergang der Rampe von einer Konfiguration in die andere behindern kann.

6. Elektronische Vorrichtung (26) nach Anspruch 5, wobei das Steuermodul (36) konfiguriert ist, um den Wechsel der Rampe (22) von der eingezogenen in die ausgefahrene Konfiguration nur dann zu steuern, wenn ein Merkmal einer Person mit eingeschränkter Mobilität erkannt wird.

7. Elektronische Vorrichtung (26) nach einem der vorherigen Ansprüche, wobei die elektronische Vorrichtung (26) ferner ein Erzeugungsmodul (47) umfasst, das konfiguriert ist, um ein Informationssignal (S) in Bezug auf die Konfiguration der Rampe (22) zu erzeugen, wobei das Informationssignal (S) für einen Benutzer oder ein elektronisches Überwachungssystem bestimmt ist.

8. Fahrzeug (10), insbesondere autonomes Kraftfahrzeug, umfassend:
- eine Tür (20);
- eine Rampe (22) für den Zugang zu der Tür (20); und
- eine elektronische Vorrichtung (26) zur Steuerung der Rampe (22);
- einen Sensor (24), der mit der Steuerelektronik (26) verbunden ist;
**dadurch gekennzeichnet, dass** die elektronische Steuervorrichtung (26) gemäß einem der vorherigen Ansprüche ist.

9. Verfahren zum Steuern einer Rampe für den Zugang zu einer Fahrzeugtür, wobei das Steuerverfahren von einer elektronischen Steuervorrichtung (26) durchgeführt wird und die folgenden Schritte umfasst:
- Erfassen, über mindestens einen Sensor (24), von mindestens einem Element von Interesse (38), das sich in einem benachbarten Bereich (40) der Tür (20) befindet;
- Steuern des Übergangs der Rampe (22) von einer von der eingezogenen und ausgefahrenen Konfiguration in die andere abhängig von der Erfassung von Elementen von Interesse (38);
wobei der Erfassungsschritt die Zuweisung eines Vertrauensindexes zu jedem Element von Interesse (38) abhängig von vorbestimmten Parametern umfasst, und während des Steuerschritts der Durchgang der Rampe (22) von einer Konfiguration zu der anderen Konfiguration abhängig von dem Resultat des Vergleichs des Vertrauensindexes von jedem Element von Interesse (38) mit mindestens einem vorbestimmten Schwellenwert (SB, SH) gesteuert wird.

10. Computerprogramm, umfassend Softwareanweisungen, die, wenn sie von einem Computer ausgeführt werden, ein Verfahren nach dem vorherigen Anspruch implementieren.

## Claims

1. An electronic device (26) for controlling an access ramp (22) to a door (20) of a vehicle (10), the ramp (22) being able to move from a retracted configuration to a deployed configuration, the electronic device (26) including:
- a detection module (34) configured to detect, via at least one sensor (24), at least one element of interest (38) located in a nearby area (40) near the door (20), each sensor (24) being able to be linked to the detection module (34); and
- a command module (36) configured to command the passage of the ramp (22) from one of the retracted and deployed configurations to the other as a function of the detection of the at least one element of interest (38);
**characterized in that** the detection module (34) is configured to assign each element of interest (38) a confidence index as a function of predetermined parameters, the command module (36) being able to command the passage of the ramp (22) from one of the retracted and deployed configurations to the other as a function of the result of the comparison of the confidence index of each element of interest (38) with at least one predetermined threshold value (SB, SH).

2. The electronic device (26) according to claim 1, wherein the at least one of the sensors (24) is a camera able to embedded in the vehicle (10).

3. The electronic device (26) according to claim 1 or 2, wherein, for each point of the nearby area (40), the distance between the door and said point (d) is smaller than a maximum predetermined distance (D).

4. The electronic device (26) according to any one of the preceding claims, wherein the electronic device (26) further includes an activation module (42) configured to command the detection module (34), the activation module (42) being able to detect the presence of a person (44) in a nearby area (40) near the door of the vehicle (10).

5. The electronic device (26) according to any one of the preceding claims, wherein each element of interest (38) is chosen from the group consisting of:
- a characteristic of a person with reduced mobility; and
- an obstacle (41) that may hinder the passage of the ramp from one configuration to the other.

6. The electronic device (26) according to claim 5, wherein the command module (36) is configured to command the passage of the ramp (22) from the retracted configuration to the deployed configuration only if a characteristic of a person with reduced mobility is detected.

7. The electronic device (26) according to any one of the preceding claims, wherein the electronic device (26) further includes a generating module (47) configured to generate an information signal (S) relative to the configuration of the ramp (22), the information signal (S) being intended for a user or an electronic supervision system.

8. A vehicle (10), in particular an autonomous motor vehicle, comprising:
- a door (20);
- an access ramp (22) to the door (20); and
- an electronic device (26) for controlling the ramp (22);
- a sensor (24) linked to the electronic control device (26);
**characterized in that** the electronic control device (26) is according to any one of the preceding claims.

9. A method for controlling an access ramp to a vehicle door, the control method being implemented by an electronic control device (26) and comprising the following steps:
- detecting, via at least one sensor (24), at least one element of interest (38) located in an area (40) near the door (20);
- commanding the passage of the ramp (22) from one of the retracted and deployed configurations to the other as a function of the detection of elements of interest (38);
the detecting step including assigning each element of interest (38) a confidence index as a function of predetermined parameters, and during the commanding step, the passage of the ramp (22) from one configuration to the other configuration is commanded as a function of the result of the comparison of the confidence index of each element of interest (38) with at least one predetermined threshold value (SB, SH).

10. A computer program comprising software instructions which, when executed by a computer, carry out a method according to the preceding claim.
